# EUROPEAN PATENT SPECIFICATION

(11) **EP 3 822 838 B1**
(45) Date of publication and mention of the grant of the patent: **03.11.2021**
(21) Application number: 20166401.8
(22) Date of filing: 27.03.2020
(51) Int. Cl.: G06F 21/79, G06F 21/57

(54) **METHOD AND APPARATUS FOR IMPROVED CODE AUTHENTICATION BETWEEN SOCS AND RE-WRITABLE MEMORY**
VERFAHREN UND VORRICHTUNG ZUR VERBESSERTEN CODE-AUTHENTIFIZIERUNG ZWISCHEN SOCS UND WIEDERBESCHREIBBAREM SPEICHER
PROCÉDÉ ET APPAREIL POUR UNE AUTHENTIFICATION DE CODE AMÉLIORÉE ENTRE SOCS ET MÉMOIRE RÉINSCRIPTIBLE

(30) Priority: 18.11.2019 EP 19209650
(43) Date of publication of application: 19.05.2021
(73) Proprietor: Shenzhen Goodix Technology Co., Ltd., Shenzhen, Guangdong 518045 (CN)
(72) Inventor: Krause, Markus, 01307 Dresden (DE); Hesse, Kay, 01129 Dresden (DE)
(74) Representative: Lippert Stachow Patentanwälte Rechtsanwälte Partnerschaft mbB

(56) References cited:
- US-A1- 2005 193 217
- US-A1- 2012 272 071
- US-A1- 2019 080 093

## Description

The invention relates to a method for improving code authentication between a System on Chip (SoC) and a FLASH memory, whereas a FLASH memory size is bigger than an internal memory size of the SoC.

Today's highly integrated SoCs typically contain one or more microprocessors. These cores run program code in the order of several hundred kilobytes to several megabytes which need to be stored in non-volatile memory. Ideally, this would be ROM (read-only memory) which is available in all relevant technologies. However, often there is also the requirement to enable code updates later in lifetime of the SoCs. This then requires re-programmable non-volatile memory such as FLASH. Unfortunately, this is not available in all, especially not in relevant deep sub-micron technologies. Hence, a typical configuration seen today is an ASIC in a modern low-power technology, coupled with an external FLASH chip. In the following "FLASH" in the sense of this invention should be read as synonym for any non-volatile, electrically erasable and re-writable memory technology, as e.g. FLASH, EEPROM, FRAM, MRAM et.al. This is not to be understood in a restrictive way.

In order to also minimize the area of the internal RAM, these cores often do not download their complete code from the external FLASH into their RAM, but use a so-called "execute-in-place" (XIP) mode from FLASH, i.e. they load their code through a (small) internal cache from the FLASH. XIP is a method of executing programs directly from long term storage rather than copying it into RAM. It is an extension of using shared memory to reduce the total amount of memory required. This now poses a problem for code authenticity, i.e. leave these cores vulnerable to code injection when an attacker has access to the interface between the FLASH and the SoC. For the scope of this invention it is not relevant whether or not the code in FLASH, hence the non-volatile, electrically erasable and re-writable memory, is encrypted. Encryption makes it harder for an attacker to achieve his goal, but not impossible.

There are various methods available in the state-of-the-art to establish authenticity of the FLASH code.

One method uses cryptographic hashes/checksums. Thereby, the whole code image is hashed by the rightful creator and a cryptographic hash is appended to this image. This is also known as cryptographic signature. When using the code later, the SoC can re-calculate the hash and check it against the stored value to establish trust. However, this would not protect against later injection attacks in XIP-modes, as then not the complete image is loaded at once to re-check the hash. Instead, only cache-line sized code blocks are read from FLASH in no particular order.

In another method a per-cache-line hash/checksum is used. There are various subtypes of the per-cache-line method. In one subtype each cache line in the FLASH is appended their respective hash value, i.e. instead of e.g. 16 bytes per cache line the core has to read 20 bytes from FLASH. This makes address calculation for caching more complex and increases FLASH size. A variant of this would be to separate the actual cache lines from their hashes in the FLASH and load them separately, but this also makes the cache handling quite complex.

In another subtype of the per-cache-line method each cache line in the FLASH contains its respective hash value instead of a payload data. This allows for a more straightforward address handling when fetching cache lines but reduces code density and ultimately requires more cache lines total for the same program.

In another further subtype of the per-cache-line method a per-cache-line hash is stored internally during an initial sweep over the complete image. When a cache line is loaded later, its hash is re-calculated and compared against the internal value. Such a method is disclosed in WO 2019/134781 A1. Further US 2019/080093 discloses another method for secure cache loading.

All of these cache-line based methods incur relatively high costs in area and complexity and have therefor limited use for scenarios where big FLASH memories are involved.

It is therefore an objective of the invention to provide a method that makes it more difficult for attacker to inject code and data exchanged between a non-volatile, electrically erasable and re-writable memory and the SoC, which uses the XIP mode. In doing so, existing systems in which the non-volatile, electrically erasable and re-writable memory is larger than the internal memory of the SoC are to be improved in such a way that with the inventive method the costs are saved in terms of area and complexity and at the same time the security of the exchanged data is improved with less effort.

The objective of the present invention will be solved by a method comprising the following steps:
- performing a full initial authentication scan of a FLASH image once after a cold boot of the system, and
- selecting a set of C = *2ⁿ* (pseudo-)randomly distributed addresses out of the full FLASH memory size of *F* = *2^{m}* where *n* and *m* are natural numbers and n < *m*, whereas
- during the initial scan the read content of the FLASH image according to the selected addresses of the set C is concurrently stored as a reference value in an internal RAM of the SoC, whereas
- a means detects if an address out of set C is read during a cache line fetch and whereas its newly read value is compared against the stored reference value of it, indicating that an attack has occurred if these two values do not match, otherwise no attack has occurred.

The wording "FLASH image" is a synonym for a non-volatile, electrically erasable and re-writable memory image. The principle idea is to have a full authentication scan of the FLASH image once after a cold boot with concurrent internal storage of randomly selected contents. This includes calculating the hash of the full image and comparing against the signature. If these match then initial trust is established. When later using the image by reading individual cache lines sometimes some of their contents are compared against the internally stored values from the initial scan.

The concurrent storage works as follows: Based on a (pseudo-) random distribution, a set *C = 2ⁿ* addresses out of the full FLASH size of *F* = *2^{m}* is selected. *n* and *m* are natural numbers, with *n* < *m.* When during the initial scan an address out of the set *C* is read (for hash calculation), its value is also stored in internal RAM. Later, if again an address out of the set *C* is read during a cache line fetch, its newly read value is compared against the stored reference value of it. A mismatch detected at this point in time would indicate an attack. If the FLASH is written later and an address out of the set *C* is hit then the write value is not only written into FLASH but also replaces the respective entry in the internal RAM.

In a variant of the inventive method, the set of C (pseudo-) random addresses is generated by a true random number generator (TRNG) with a hardware source of entropy, e.g. cross-coupled ring oscillators. The SoC would retrieve *2ⁿ* random numbers from the TRNG as addresses. Ring oscillators are just one of the cheapest hardware sources of entropy, also others are possible.

In another variant of the inventive method, a linear feedback shift register (LFSR) is used with (pseudo-) random seed which may come from the TRNG to generate a set of random offsets within a group of *2ⁿ* address regions, whereas *m* address bits necessary for accessing the FLASH are separated into two groups, whereas *n* most significant bits are simply iterated over each possible address region and *m* - *n* least significant bits are populated from the LFSR results.

In a further other variant of the inventive method, the set of C (pseudo-) randomly distributed addresses is pre-determined from a ROM.

In any case, it is important to generate these addresses in a manner that they cannot simply be guessed or derived by an attacker and they provide good coverage of the complete FLASH image. "Good coverage" in the sense of this invention does not necessarily mean that the selected addresses are completely evenly distributed over the full FLASH range of *F = 2^{m}* possible addresses. One could also put more emphasis on specific regions in FLASH, i.e. distribute more checks into sensitive areas and reduce the coverage on less sensitive regions. "Sensitive" in this context means it contains data that are critical for operation (e.g. program code) which would fail function (or be denied certificates when failing) when the contents would be altered. Less sensitive data would be e.g. data representing logos or similar images.

So, in a variant of the inventive method, the set of (pseudo-) random addresses *C* are distributed evenly over the full FLASH range of *2^{m}* possible addresses or they are distributed unevenly with higher density into sensitive areas of the FLASH memory and reduced coverage into less sensitive areas of the FLASH memory.

It should also be mentioned that the set of C selected addresses needs to be constant between two full scans. For example: after the initial cold-boot scan, the selected addresses stay the same for all subsequent FLASH reads and writes when the SoC's cores execute their code. It is possible, though, to discard the initial set of C addresses and select a new set of C addresses, but this then also requires a new full scan to ensure that the new reference values indeed come from the authenticated image.

In a preferred variant of the inventive method, a FLASH address space of an external FLASH is divided into *2ⁿ* segments, whereas each segment contains one (pseudo-) random location that belongs to an address of set *C*. In this case a TagRAM that contains *2ⁿ* tags which comprises an address field containing the address of the TagRAM entry and a reference value field containing the reference value can be used as internal RAM of the SoC. Using a TagRAM has the advantage that of being a well-established concept known from e.g. direct-mapped caches which can also easily be implemented on the SoC.

In case of a FLASH read the FLASH read address is split into two vectors, whereas the *n* most significant bits (MSBs) are taken to form the TagRAM address, the *m* - *n* least significant bits (LSBs) are used to compare against the address field of the TagRAM entry, whereas if the LSBs match against the address field of the TagRAM entry then this address is one from the set *C* of selected addresses. This is a first step of the inventive method, namely to detect if the selected address can be used to detected if the read content is correct or has been changed by an attack.

If the address is one from the set C of selected addresses the reference value field is compared against the FLASH read data. This is a second step in comparing if a stored reference value in RAM of the SoC is identical with the read value of the FLASH memory.

In case of a FLASH write the FLASH write address is split into two vectors, whereas the *n* most significant bits (MSBs) are taken to form the TagRAM address, the *m* - *n* least significant bits (LSBs) are used to compare against the address field of the TagRAM entry, whereas if the LSBs match against the address field of the TagRAM entry then a TagRAM write enable is set and the reference value in the TagRAM is replaced with the new write data. The TagRAM actually has to be read for the address LSBs before the new tag with the new reference value can be written, so the FLASH write case implies a two-stage operation.

In another variant of the inventive method, the internal RAM is a fully associated contents-addressed RAM (CAM) containing all addresses from the selected set *C*, whereas if the FLASH read address matches with a CAM address entry, the CAM provides the address for the reference value stored in RAM that is used to compare against the FLASH read data. Using a CAM has the advantage of not being limited to an even distribution of FLASH address segments but can support arbitrary distributions for the set C which would allow to have more checks in more critical sections.

This variant of the inventive method is similar to a fully associative cache. The CAM will contain all addresses from the selected set *C*. In case of a match this CAM then provides the address for the reference value RAM that is then used to compare against the FLASH read data. This type of implementation, though, is much more expensive, especially the AddrCAM can become timing-critical (due to the *2ⁿ* concurrent comparisons to detect a hit) and alone has a size of *A* = *2ⁿ x (m + n)* bits with the additional cost of R *= 2ⁿ x w* bits for the reference value RAM. *w* is equal to the FLASH word width. However, it has the advantage of not requiring the two steps described for FLASH write with the TagRAM-based solution.

In another variant of the inventive method, the selected set of C is different to the power of 2. The number of reference values (the number of addresses in *C*) does not necessarily have to be a power of 2. The explanations on address selection, storage and matching given before still apply whereas the presented methods have to adopt to these numbers.

The objective of the present invention will also be solved by an apparatus for performing the method according to claim 1 to 12, whereas the apparatus comprises a System on Chip (SoC) and a non-volatile, electrically erasable and re-writable memory connected to the SoC over an interface, whereas the SoC comprises an internal RAM for storing reference values according to selected addresses of a set *C* and a means for detecting and comparing if a reference value of a read address out of set C matches against the stored reference value of it in the internal RAM.

In a variant of the apparatus for performing the inventive method, the internal RAM is a TagRAM or a contents-addressed RAM (CAM) .

The new and inventive method according to the claims will allow providing a good level of trust for the FLASH contents combined with reduced overhead. It also has the advantages that the method works independently of potential FLASH encryption, works with non-volatile, electrically erasable and re-writable memories of any size, allows to balance the level of protection against the hardware overhead, and can be combined with other protection methods for very sensitive regions.

The invention will be explained in more detail using exemplary embodiments.

The appended drawings show
- Fig. 1: TagRAM-based embodiment for storage and matching for FLASH read case;
- Fig. 2: TagRAM-based embodiment for storage and matching for FLASH write case;
- Fig. 3: CAM-Based embodiment for storage and matching for FLASH read case.

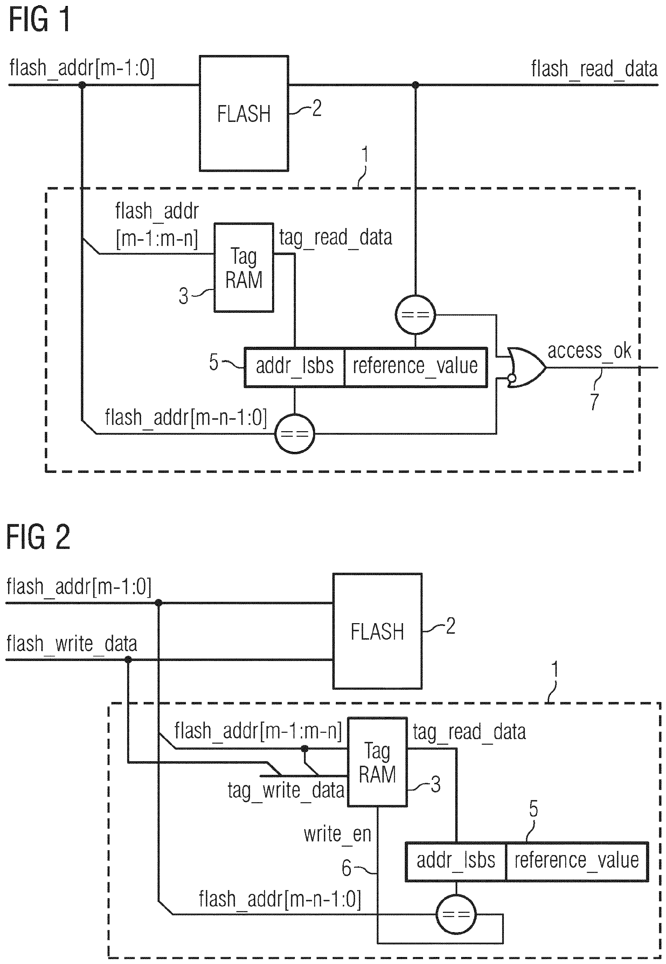

Figure 1 shows a first embodiment of the invention for the case of a FLASH read using a TagRAM 3 as internal RAM of the SoC 1. For a given FLASH size of *F = 2^{m}*, a FLASH word width of *w* bits and a chosen number of *C = 2ⁿ* checkpoint addresses the TagRAM 3 has a size of *T = 2ⁿ x (m* - *n + w)* bits. The FLASH address is generated inside the SoC and the FLASH read data are used inside the SoC as well. The actual storage is located in a TagRAM 3 that contains *2ⁿ* tags which consist of two fields each. The FLASH read address is split into two vectors: The *n* most significant bits (MSBs) are taken to form the TagRAM address, the *m* - *n* least significant bits (LSBs) are used to compare against the address field of the TagRAM entry. If the LSBs match against the address field then this address is one from the set *C* of selected addresses. In this case the reference value field is compared against the FLASH read data. If they match the access was OK 7, otherwise it means an injection attack has been detected.

As storage of the reference values must be in internal memory there must be a means to detect when the SoC wants to access (read or write) a selected address for a reference value. As mentioned before, the internal memory for the reference values would typically be RAM, where each location contains a reference value. However, a mapping between the selected FLASH addresses and the addresses of this reference value RAM is necessary, as the (pseudo-) randomly selected set *C* contains only *2ⁿ* values out of a range of *2^{m},* so these are not contiguous.

Figure 2 shows the same embodiment of the invention as in figure 1, but for the case of a FLASH write using a TagRAM 3 as internal RAM of the SoC 1. The address matching works as for the read case, but this time the address match serves as TagRAM write enable 6, i.e. if the FLASH write is going to one of the set *C* of selected addresses the reference value in the TagRAM is replaced with the new write data.

The TagRAM-based approach described above is related to cache implementations (hence also the term TagRAM) and the scheme presented above is similar to a so-called direct-mapped cache.

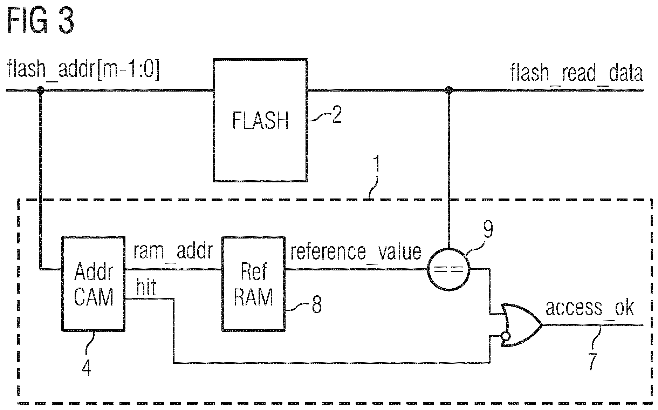

Figure 3 shows a second embodiment of the invention for the FLASH read case that is similar to a fully associative cache. The CAM 4 will contain all addresses from the selected set C. In case of a match this CAM 4 then provides the address for the reference value in RAM 8 that is then used to compare 9 against the FLASH read data 2. This type of implementation, though, is much more expensive, especially the AddrCAM 4 can become timing-critical (due to the *2ⁿ* concurrent comparisons to detect a hit) and alone has a size of *A* = *2ⁿ x (m + n)* bits with the additional cost of R *= 2ⁿ x w* bits for the reference value RAM. *w* is equal to the FLASH word width. However, it has the advantage of not requiring the two steps described for FLASH write with the TagRAM-based solution.

The protection against code injection presented here is not comprehensive; instead, it uses a probabilistic approach to limit the chance of an attacker injecting code into the SoC / FLASH interface. The likelihood of detecting an injection is directly proportional to the ratio *2ⁿ*/*2^{m} = 2^{n-m}*. When a reference value for each FLASH word is stored every altering could be detected with absolute certainty, but then no XIP-mode would be necessary as this actually means that the complete FLASH contents would fit into internal RAM and hence needs only be authenticated on the initial load. That ratio mentioned above can also be used to tune the hardware effort (extra internal memory for the reference values plus the comparators) against the detection probability.

Nevertheless, the approach presented here can be combined with other solutions to provide full integrity checking for critical regions of FLASH contents. One such solution has been presented in WO 2019/134781 A1 which describes the use of internally stored per-cache line checksums, which might be too expensive to cover the complete FLASH contents, but would complement the method described in this invention to form an advantageous compromise between integrity coverage and hardware effort.

The present invention is targeted to SoCs 1 with external FLASH 2 that use "execute-in-place" modes to fetch code and date into internal memory (not shown) that cannot hold the complete FLASH image. It allows increasing protection against malicious injection of data into the interface between SoC and FLASH with a good balance of security versus hardware effort.

### List of Reference Signs

- 1: System on Chip (SoC)
- 2: External FLASH memory, non-volatile, electrically erasable memory
- 3: TagRAM
- 4: Contents-addressed RAM (CAM)
- 5: logical layout of TagRAM contents for comparison
- 6: TagRAM write enable signal
- 7: access successful
- 8: normal RAM for reference values
- 9: comparison of reference value of RAM and FLASH data

## Claims

1. A method for improving code authentication between a SoC (1) and a FLASH memory (2), whereas a FLASH memory size is bigger than an internal memory size of the SoC (1), the method comprising the following steps:
- performing a full authentication initial scan of a FLASH image once after a cold boot of the system, and
- selecting a set of *C = 2ⁿ* (pseudo-)randomly distributed addresses out of the full FLASH memory size of *F = 2^{m}* with *n* and *m* are natural numbers and n *< m*, whereas
- during the initial scan the read content of the FLASH image according to the selected addresses of the set C is concurrently stored as a reference value in an internal RAM (8) of the SoC (1), whereas
- a means detects if an address out of set C is read during a cache line fetch, and whereas its newly read value is compared against the stored reference value of it, indicating that an attack has occurred if these two values do not match, otherwise no attack has occurred.

2. The method according to claim 1, wherein the set of C (pseudo-)random addresses is generated by a true random number generator - TRNG - with a hardware source of entropy, e.g. cross-coupled ring oscillators.

3. The method according to claim 1 or 2, wherein the set of C (pseudo-)random addresses is generated by a linear feedback shift register - LFSR - with (pseudo-)random seed, whereas the seed comes from the TRNG.

4. The method according to claim 1, wherein the set of C (pseudo-)random addresses is pre-determined from a ROM.

5. The method according to claim 1, wherein the set of *C* (pseudo-)random addresses are distributed evenly over the full FLASH range of *2^{m}* possible addresses or they are distributed unevenly with higher density into sensitive areas of the FLASH memory and reduced coverage into less sensitive areas of the FLASH memory.

6. The method according to claim 1, wherein a FLASH address space is divided into *2ⁿ* segments, whereas each segment contains one (pseudo-) random location that belongs to an address of set *C*.

7. The method according to claim 6, wherein the internal RAM of the SoC is a TagRAM (3) that contains *2ⁿ* tags which comprises an address field containing the address of the TagRAM entry and a reference value field containing the reference value.

8. The method according to one of the claims 1 or 7, wherein in case of a FLASH read the FLASH read address is split into two vectors, whereas the n most significant bits (MSBs) are taken to form the TagRAM address, the *m-n* least significant bits (LSBs) are used to compare against the address field of the TagRAM entry, whereas if the LSBs match against the address field of the TagRAM entry then this address is one from the set *C* of selected addresses.

9. The method according to one of the claims 1 or 7, wherein in case of a FLASH write the FLASH write address is split into two vectors, whereas the n most significant bits (MSBs) are taken to form the TagRAM address, the *m-n* least significant bits (LSBs) are used to compare against the address field of the TagRAM entry, whereas if the LSBs match against the address field of the TagRAM entry then a TagRAM write enable is set and the reference value in the TagRAM (3)is replaced with the new write data.

10. The method according to claim 1, wherein the internal RAM is a fully associated contents-addressed RAM (4) - CAM - containing all addresses from the selected set *C*, whereas if the FLASH read address matches with a CAM address entry, the CAM (4) provides the address for the reference value stored in RAM that is used to compare against the FLASH read data.

11. The method according to one of the former claims, wherein the selected set of C is different to the power of 2.

12. An Apparatus for performing the method according to claim 1 to 11, whereas the apparatus comprises a System on Chip (1) - SoC - and a non-volatile, electrically erasable memory (2) connected over an interface, whereas the SoC (1) comprises an internal RAM (8) for storing reference values according to selected addresses of the set *C* and a means for detecting and comparing if a reference value of a read address out of set C match against the stored reference value of it in the internal RAM (8).

13. The apparatus according to claim 12, wherein the internal RAM is a TagRAM (3) or a contents-addressed RAM - CAM (4).

## Patentansprüche

1. Verfahren zum Verbessern einer Code-Authentifizierung zwischen einem SoC (1) und einem FLASH-Speicher (2), wobei die FLASH-Speichergröße größer ist als eine Größe eines internen Speichers des SoC (1), wobei das Verfahren die folgenden Schritte umfasst:
- Ausführen eines vollständigen anfänglichen Authentifizierungsscans eines FLASH-Bildes einmal nach einem Kaltstart des Systems;
- Auswählen einer Gruppe von *C = 2ⁿ* (pseudo-)zufällig verteilten Adressen aus der vollständigen FLASH-Speichergröße von *F = 2^{m}* wobei *n* und *m* natürliche Zahlen sind und *n* < *m* ist;
- während des anfänglichen Scans der Leseinhalt des FLASH-Bildes gemäß den ausgewählten Adressen der Gruppe, gleichzeitiges Speichern von *C* als ein Referenzwert in einem internen RAM (8) des SoC (1);
- wenn ein Element erkennt, ob eine Adresse aus der Gruppe C während eines Cachezeilenabrufs gelesen wird und wobei sein neu gelesener Wert mit seinem gespeicherten Referenzwert verglichen wird, Anzeigen, dass ein Angriff stattgefunden hat, wenn diese beiden Werte nicht übereinstimmen, andernfalls Anzeigen, dass kein Angriff stattgefunden hat.

2. Verfahren nach Anspruch 1, wobei die Gruppe von C (pseudo-)zufälligen Adressen durch einen echten Zufallszahlengenerator (True Random Number Generator, TRNG) mit einer Hardware-Entropiequelle, z.B. kreuzgekoppelten Ringoszillatoren, erzeugt wird.

3. Verfahren nach Anspruch 1 oder 2, wobei die Gruppe von *C* (pseudo-)zufälligen Adressen durch ein lineares rückgekoppeltes Schieberegister (Linear Feedback Shift Register, LFSR) mit einer (pseudo-)zufälligen Seed erzeugt wird, wobei die Seed von dem TRNG kommt.

4. Verfahren nach Anspruch 1, wobei die Gruppe von *C* (pseudo-)zufälligen Adressen von einem ROM vorbestimmt wird.

5. Verfahren nach Anspruch 1, wobei die Gruppe von *C* (pseudo-)zufälligen Adressen gleichmäßig über den vollständigen FLASH-Bereich von *2^{m}* möglichen Adressen verteilt werden oder wobei sie ungleichmäßig mit einer höheren Dichte in sensiblen Bereichen des FLASH-Speichers und mit einer geringeren Abdeckung in weniger sensiblen Bereichen des FLASH-Speichers verteilt werden.

6. Verfahren nach Anspruch 1, wobei ein FLASH-Adressenraum in *2ⁿ* Segmente geteilt wird, wobei jedes Segment einen (pseudo-)zufälligen Ort enthält, der zu einer Adresse aus der Gruppe *C* gehört.

7. Verfahren nach Anspruch 6, wobei der interne RAM des SoC ein TagRAM (3) ist, der *2ⁿ* Tags enthält, die ein Adressfeld, das die Adresse des TagRAM-Eintrags enthält, und ein Referenzwertfeld umfassen, das den Referenzwert enthält.

8. Verfahren nach einem der Ansprüche 1 oder 7, wobei in einem Fall eines FLASH-Lesens, die FLASH-Leseadresse in zwei Vektoren geteilt wird, wobei die n höchstwertigen Bits (MSBs) genommen werden, um die TagRAM-Adresse zu bilden und wobei die m-n niedrigstwertigen Bits (LSBs) verwendet werden, um sie mit dem Adressfeld des TagRAM-Eintrags zu vergleichen, wobei, wenn die LSBs mit dem Adressfeld des TagRAM-Eintrags übereinstimmen, diese Adresse eine aus der Gruppe *C* von ausgewählten Adressen ist.

9. Verfahren nach einem der Ansprüche 1 oder 7, wobei, in einem Fall eines FLASH-Schreibens, die FLASH-Schreibadresse in zwei Vektoren geteilt wird, wobei die n höchstwertigen Bits (MSBs) genommen werden, um die TagRAM-Adresse zu bilden und wobei die m-n niedrigstwertigen Bits (LSBs) verwendet werden, um sie mit dem Adressfeld des TagRAM-Eintrags zu vergleichen, wobei, wenn die LSBs mit dem Adressfeld des TagRAM-Eintrags übereinstimmen, eine TagRAM-Schreibfreigabe eingestellt wird und der Referenzwert in dem TagRAM (3) durch die neuen Schreibdaten ersetzt wird.

10. Verfahren nach Anspruch 1, wobei der interne RAM ein vollständig assoziierter inhaltsadressierter RAM (Contents-addressed RAM, CAM) (4) ist, der alle Adressen aus der ausgewählten Gruppe *C* enthält, wobei, wenn die FLASH-Leseadresse mit einem CAM-Adresseneintrag übereinstimmt, der CAM (4) die Adresse für den in dem RAM gespeicherten Referenzwert bereitstellt, der verwendet wird, um ihn mit den FLASH-Lesedaten zu vergleichen.

11. Verfahren nach einem der vorhergehenden Ansprüche, wobei die ausgewählte Gruppe von *C* verschieden von einer Potenz von 2 ist.

12. Vorrichtung zum Ausführen des Verfahrens nach einem der Ansprüche 1 bis 11, wobei die Vorrichtung eine Ein-Chip-System (System on Chip, SoC) (1) und einen nichtflüchtigen elektrisch löschbaren Speicher (2) umfasst, die über eine Schnittstelle verbunden sind, wobei der SoC (1) einen internen RAM (8) zum Speichern von Referenzwerten gemäß ausgewählten Adressen der Gruppe *C* und ein Element zum Erkennen und Vergleichen umfasst, ob ein Referenzwert einer Leseadresse aus der Gruppe *C* mit seinem gespeicherten Referenzwert in dem internen RAM (8) übereinstimmt.

13. Vorrichtung nach Anspruch 12, wobei der interne RAM ein TagRAM (3) oder ein inhaltsadressierter RAM - CAM - (4) ist.

## Revendications

1. Procédé pour améliorer l'authentification de code entre un SoC (1) et une mémoire FLASH (2), tandis que la taille de la mémoire FLASH est supérieure à la taille de la mémoire interne du SoC (1), le procédé comprenant les étapes suivantes :
- effectuer un balayage initial d'authentification complet d'une image FLASH une fois après un démarrage à froid du système, et
- sélectionner un ensemble de C = 2ⁿ adresses (pseudo-)aléatoirement distribuées dans la mémoire FLASH complète de taille F = 2^{m}, avec n et m étant des nombres naturels et n < m, où :
- pendant le balayage initial, le contenu lu de l'image FLASH selon les adresses sélectionnées de l'ensemble C est simultanément stocké comme une valeur de référence dans une RAM interne (8) du SoC (1), où :
- un moyen détecte si une adresse de l'ensemble C est lue pendant une extraction de ligne de cache et, tandis que sa valeur nouvellement lue est comparée à sa valeur de référence stockée, il indique qu'une attaque s'est produite si ces deux valeurs ne correspondent pas, sinon aucune attaque ne s'est produite.

2. Procédé selon la revendication 1, dans lequel l'ensemble de C adresses (pseudo-)aléatoires est généré par un générateur de nombres véritablement aléatoires, TRNG, avec une source matérielle d'entropie, par exemple des oscillateurs en anneau à couplage croisé.

3. Procédé selon la revendication 1 ou la revendication 2, dans lequel l'ensemble de C adresses (pseudo-)aléatoires est généré par un registre à décalage à rétroaction linéaire, LFSR, avec une graine (pseudo-)aléatoire, où la graine provient du TRNG.

4. Procédé selon la revendication 1, dans lequel l'ensemble de C adresses (pseudo-)aléatoires est prédéterminé à partir d'une ROM.

5. Procédé selon la revendication 1, dans lequel l'ensemble de C adresses (pseudo-)aléatoires sont distribuées uniformément sur l'ensemble de la plage FLASH de 2^{m} adresses possibles, ou celles-ci sont distribuées de manière inégale avec une densité plus élevée dans les zones sensibles de la mémoire FLASH et avec une couverture réduite dans les zones moins sensibles de la mémoire FLASH.

6. Procédé selon la revendication 1, dans lequel un espace d'adresse FLASH est divisé en 2ⁿ segments, où chaque segment contient un emplacement (pseudo-)aléatoire qui appartient à une adresse de l'ensemble C.

7. Procédé selon la revendication 6, dans lequel la RAM interne du SoC est une TagRAM (3) qui contient 2ⁿ étiquettes qui comprend un champ d'adresse contenant l'adresse de l'entrée TagRAM et un champ de valeur de référence contenant la valeur de référence.

8. Procédé selon l'une des revendications 1 ou 7, dans lequel, dans le cas d'une lecture FLASH, l'adresse de lecture FLASH est divisée en deux vecteurs, où les n bits les plus significatifs, MSB, sont pris pour former l'adresse TagRAM, les m-n bits les moins significatifs, LSB, sont utilisés pour être comparés au champ d'adresse de l'entrée TagRAM, où si les LSB correspondent au champ d'adresse de l'entrée TagRAM, alors cette adresse est l'une de l'ensemble C d'adresses sélectionnées.

9. Procédé selon l'une des revendications 1 ou 7, dans lequel, dans le cas d'une écriture FLASH, l'adresse d'écriture FLASH est divisée en deux vecteurs, où les n bits les plus significatifs, MSB, sont pris pour former l'adresse TagRAM, les m-n bits les moins significatifs, LSB, sont utilisés pour être comparés au champ d'adresse de l'entrée TagRAM, où si les LSB correspondent au champ d'adresse de l'entrée TagRAM, alors une validation d'écriture TagRAM est établie et la valeur de référence dans la TagRAM (3) est remplacée par les nouvelles données d'écriture.

10. Procédé selon la revendication 1, dans lequel la RAM interne est une RAM à contenu adressable entièrement associée (4), CAM, contenant toutes les adresses de l'ensemble sélectionné C, où si l'adresse de lecture FLASH correspond à une entrée d'adresse CAM, la CAM (4) fournit l'adresse pour la valeur de référence stockée dans la RAM qui est utilisée pour être comparée aux données de lecture FLASH.

11. Procédé selon l'une des revendications précédentes, dans lequel l'ensemble sélectionné C est différent de la puissance de 2.

12. Appareil pour la mise en œuvre du procédé selon les revendications 1 à 11, où l'appareil comprend un système sur puce (1), SoC, et une mémoire non volatile effaçable électriquement (2) connectés par une interface, où le SoC (1) comprend une RAM interne (8) pour stocker des valeurs de référence selon des adresses sélectionnées de l'ensemble C et un moyen pour détecter et comparer si une valeur de référence d'une adresse lue de l'ensemble C correspond à la valeur de référence stockée de celle-ci dans la RAM interne (8).

13. Appareil selon la revendication 12, dans lequel la RAM interne est une TagRAM (3) ou une RAM à contenu adressable, CAM, (4).
